# EUROPEAN PATENT APPLICATION

(11) **EP 4 481 193 A1**
(43) Date of publication of application: **25.12.2024**
(21) Application number: 23315252.9
(22) Date of filing: 20.06.2023
(51) Int. Cl.: F03D 13/10, F03D 13/20, F03D 13/25, E02B 17/02, E02D 27/42

(54) **SUPPORT STRUCTURE FOR AN OFFSHORE WIND TURBINE AND PROCESS TO INSTALL SAID SUPPORT STRUCTURE**

(71) Applicant: TotalEnergies OneTech, 92400 Courbevoie (FR)
(72) Inventor: Bounhoure, François, 78290 Croissy sur Seine (FR)
(74) Representative: Innovincia

(57) **Abstract**

The present invention relates to a support structure (1) for an offshore wind turbine, said support structure (1) comprising:
- a first structure part (A) destined to be fixed to the seabed (Sb), said first structure part (A) comprising at least three dummy legs (3) distributed regularly on a first circle (X1) having as center a longitudinal axis (Y) of the support structure (1) and extending along said longitudinal axis (Y) of the support structure (1), said dummy legs (3) comprising a lower extremity (3a) designed to face the seabed (Sb) and an upper extremity (3b) opposed to the lower extremity (3a), the first structure part (A) also comprising at least three anchor devices (5) to the seabed (Sb) linked to the at least three dummy legs (3),
- - a second structure part (B) comprising at least three structure legs (4) comprising a lower extremity (Ba) facing the first structure part (A) and an upper extremity (Bb) configured to be placed above the sea level (SI),

wherein at least one anchor device (5) of the first structure part (A) is positioned angularly between two adjacent dummy legs (3) on a second circle (X2) having as center the longitudinal axis (Y) of the support structure (1),
and wherein at least one of the dummy legs (3) of the first structure part (A) and/or of the structure legs of the second structure part (B) are at least partially filled with a solid ballast (10).

## Description

### TECHNICAL FIELD:

The present invention relates to a support structure for an offshore wind turbine and the process to install such a support structure. More precisely, the present invention relates to a support structure resting and fixed on the seabed for average depths around 80 to 150m.

### BACKGROUND:

For shallower depths around 50m, it is well known to use support structures, like jacket structures, for offshore wind turbines. Such a support structure rests on the seabed and is fixed to the ground with anchor devices. The support structure extends above the sea level to receive a wind turbine mast. Generally, this support structure is made of one piece and the greater the depth is, the higher the support structure must be.

For greater depths around 80 to 150m, the support structure must be high enough to reach such depths. Such a height may be problematic for the installation of the support structure on the seabed. Indeed, the support structure is generally brought vertically on site with a transportation barge and lift by a floating crane to be placed on the seabed. For such depths, the transportation barge and the floating crane must be greater and heavier which will increase the costs and impact the planification of the installation, especially for a serial installation of several support structures for a wind farm. Furthermore, depending on which anchor devices are used, like piles drilled into the seabed, the fixation may be more complicated due to the depth.

One aim of the present invention is to provide a support structure for an offshore wind turbine adapted for average depths around 80 to 150m and an enhanced anchor device. Another aim of the present invention is also to provide an adapted process of installation of the support structures for a wind farm.

To this end, the invention relates to a support structure for an offshore wind turbine, said support structure comprising:
- a first structure part destined to be fixed to the seabed, said first structure part comprising at least three dummy legs distributed regularly on a first circle having as center a longitudinal axis of the support structure and extending along said longitudinal axis of the support structure, said dummy legs comprising a lower extremity designed to face the seabed and an upper extremity opposed to the lower extremity, the first structure part also comprising at least three anchor devices to the seabed linked to the at least three dummy legs,
- a second structure part comprising at least three structure legs comprising a lower extremity facing the first structure part and an upper extremity configured to be placed above the sea level,

wherein at least one anchor device of the first structure part is positioned angularly between two adjacent dummy legs on a second circle having as center the longitudinal axis of the support structure,
and wherein at least one of the dummy legs of the first structure part and/or of the structure legs of the second structure part are at least partially filled with a solid ballast.

According to an aspect of the invention, the dummy legs of the first structure part and/or of the structure legs of the second structure part comprise at least one hollowed portion on their length filled with the solid ballast.

According to another aspect of the invention, the dummy legs of the first structure part and/or the structure legs of the second structure part are filled with the solid ballast on the entire of their length.

According to another aspect of the invention, the upper extremities of the dummy legs of the first structure part and/or of the structure legs of the second structure part are opened in order to fill with a solid ballast.

According to another aspect of the invention, the dummy leg of the first structure part and/or the structure leg of the second structure part comprise at least one side opening communicating with a hollowed portion of the dummy leg of the first structure part and/or the structure leg of the second structure part in order to fill with a solid ballast said dummy legs of the first structure part and/or said structure legs of the second structure part.

According to another aspect of the invention, the solid ballast comprises at least one of the following materials: sand, gravel, concrete grouting, magnadense, material recovered on site.

According to another aspect of the invention, the support structure comprises at least one intermediate element placed between the first structure part and the second structure part.

According to another aspect of the invention, the first structure part and the second structure part have a standardized height and the at least one intermediate element has a variable height depending of the bathymetry.

According to another aspect of the invention, the at least one intermediate element is a metallic extension welded on the upper extremity of the dummy leg of the first structure part and/or welded on the lower extremity of the structure leg of the second structure part.

According to another aspect of the invention, the at least one intermediate element is a concrete element placed between the upper extremity of the dummy leg of the first structure part and the lower extremity of the structure leg of the second structure part.

According to another aspect of the invention, the support structure comprises an individual concrete element between each individual dummy leg of the first structure part and structure leg of the second structure part.

According to another aspect of the invention, the concrete element is at least one concrete slab placed between the first structure part and the structure leg of the second structure part.

According to another aspect of the invention, the at least one intermediate element is a steel intermediate frame linking the dummy legs of the first structure part and the structure legs of the second structure part together.

The present invention also concerns a process to install support structures for a wind farm installation, said process comprising the following steps:
- transportation on site of at least one first structure part, said first structure part comprising at least three dummy legs distributed regularly on a first circle having as center a longitudinal axis of the support structure and extending along said longitudinal axis of the support structure, said dummy legs comprising a lower extremity designed to face the seabed and an upper extremity opposed to the lower extremity, the first structure part also comprising at least three anchor devices to the seabed linked to the at least three dummy legs, at least one anchor device to the seabed of the first structure part being positioned angularly between two adjacent dummy legs on a second circle having as center the longitudinal axis of the support structure,
- installation of the first structure parts on the seabed,
- fixing the at least one first structure part on the seabed with the anchor devices,
- transportation on site of at least one second structure upper part,
- lifting and stacking the at least one second structure part on the at least one first structure part underwater,
- fixing the at least one second structure part (B) on the first structure parts,
wherein said process also comprises a step of filling the first structure parts and/or the second structure part with a solid ballast after their installation on site.

According to an aspect of the process, it also comprises a step of installation of at least one intermediate element designed to be placed between the first structure part and the second structure part.

Further features and advantages of the invention will become apparent from the following description, given by way of non-limiting example, with reference to the appended drawings, in which:
- Figure 1 is a side view of a schematic representation of a support structure for an offshore wind turbine according to a first embodiment,
- Figure 2 is a top view of a schematic representation of a first structure part for a support structure according a first embodiment,
- Figure 3 is a top view of a schematic representation of a first structure part for a support structure according a second embodiment,
- Figure 4 is a top view of a schematic representation of a first structure part for a support structure according a third embodiment,
- Figure 5 is a top view of a schematic representation of a first structure part for a support structure according a fourth embodiment,
- Figure 6 and 7 are side views of an anchor device according to two different embodiments,
- Figure 8 is a side view of a schematic representation of the junction between a first and a second structure part according to a first embodiment,
- Figure 9 is a side view of a schematic representation of a support structure for an offshore wind turbine according to a second embodiment,
- Figure 10 is a side view of a schematic representation of a support structure for an offshore wind turbine according to a third embodiment,
- Figure 11 is a side view of a schematic representation of the junction between a first and a second structure part according to a second embodiment,
- Figure 12 is a side view of a schematic representation of the junction between a first and a second structure part according to a third embodiment,
- Figure 13 and 14 are two charts of process to install support structures according to two different embodiments.

In these figures, identical elements bear the same reference numbers. The following implementations are examples. Although the description refers to one or more embodiments, this does not necessarily mean that each reference relates to the same embodiment or that the features apply only to a single embodiment. Individual features of different embodiments can also be combined or interchanged to provide other embodiments.

### SUMMARY OF INVENTION

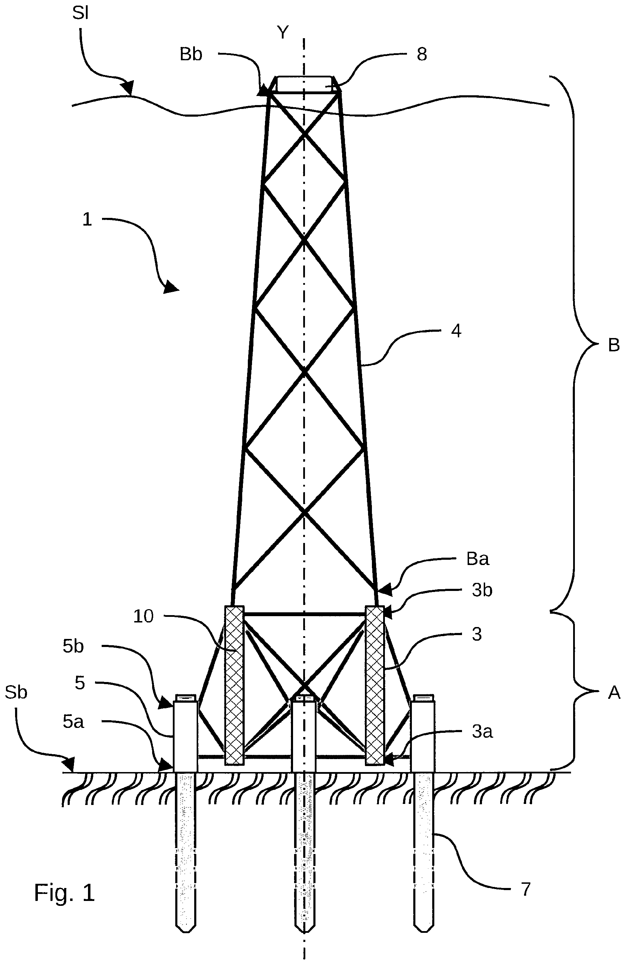

Figure 1 shows a support structure 1 for an offshore wind turbine. This support structure 1 comprises a first structure A and a second structure B designed to be stacked to form the support structure 1.

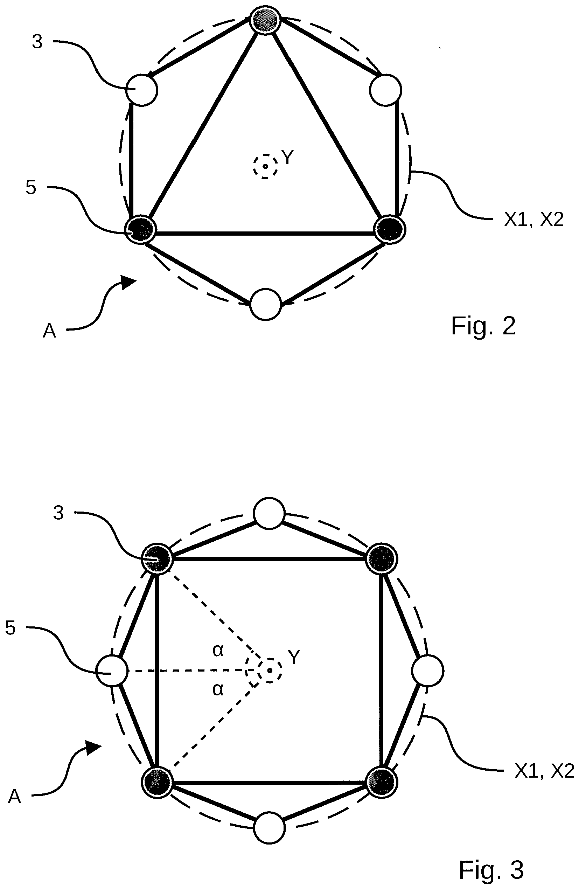

The first structure part A is configured to be fixed to the seabed Sb. The first structure part A comprises at least three dummy legs 3 distributed regularly on a first circle X1 having as center a longitudinal axis Y of the support structure 1. The dummy legs 3 are extending along said longitudinal axis Y of the support structure 1. The figure 2 shows a view from above of a first example of a first structure part A with three dummy legs 3 arranged in a triangular pattern on the first circle X1. The figure 3 shows a view from above of a second example of a first structure part A with four dummy legs 3 arranged in a square pattern on the first circle X1. Other examples with more than three or four dummy legs are also possible.

As shown in figure 1, the dummy legs 3 comprise a lower extremity 3a designed to face the seabed Sb and an upper extremity 3b opposed to the lower extremity 3a. The dummy legs 3 can be parallel to the longitudinal axis Y of the support structure 1 or they can also be inclined with respect to this longitudinal axis Y. When a dummy leg 3 is inclined, the lower extremity 3a of the dummy leg 3 is preferably more distant from the central longitudinal axis Y than its upper extremity 3b. The first circle X1 may be defined by the lower extremity 3a of the dummy legs 3 even if the dummy legs 3 are parallel to the longitudinal axis Y or inclined with respect to the longitudinal axis Y.

The first structure part A also comprises at least three anchor devices 5 to the seabed Sb linked to the at least three dummy legs 3. As illustrated in figures 2 and 3, at least one anchor device 5 of the first structure part A is positioned angularly between two adjacent dummy legs 3 that is to say within the arc defined by the radii connecting the longitudinal axis Y to the two adjacent dummy legs 3. The at least one anchor device 5 is positioned on a second circle X2 having as center the longitudinal axis Y of the support structure 1.

The fact that the anchor devices 5 are offset compared to the dummy legs 3 reduces the risks of damage on the support structure 1, especially the first structure part A when the anchor devices 5 are fixed onto the seabed Sb. This is particularly advantageous when the anchor devices 5 are fixed with piles 7 driven into the seabed Sb. Furthermore, the fact that anchor devices 5 of the first structure part A are positioned angularly between two adjacent dummy legs 3 advantageously reduces the weight and fabrication cost of the structure compared to conventional skirt piles connections

According to a first embodiment illustrated in figures 2 and 3, the second circle X2 comprising the anchor devices 5 to the seabed Sb of the first structure part A and the first circle X1 comprising the dummy legs 3 have the same radius.

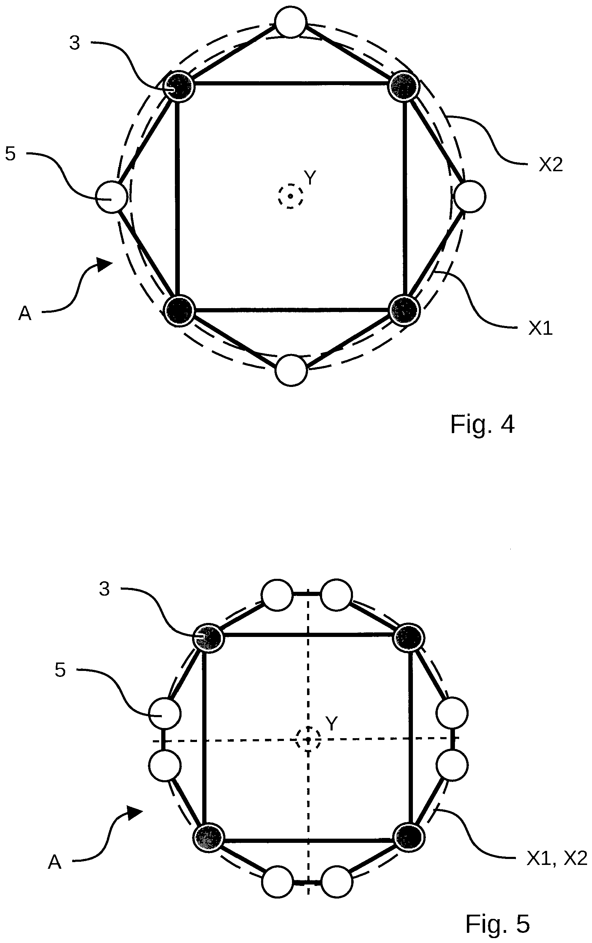

According to a second embodiment illustrated in figure 4, the second circle X2 comprising the anchor devices 5 to the seabed Sb of the first structure part A has a larger radius than the first circle X1 comprising the dummy legs 3.

According to a third embodiment not illustrated, the second circle X2 comprising the anchor devices 5 to the seabed Sb of the first structure part A has a smaller radius than the first circle X1 comprising the dummy legs 3.

In figures 2 to 4, the first structure part A comprises only one anchor device 5 to the seabed Sb between two adjacent dummy legs 3. In this particular embodiment, the angle α between the radius joining an anchor device 5 (from the axis Y) and the radii joining the two dummy legs 3 surrounding said anchor device 5 (from the axis Y), is the same, as shown in figure 3.

Another embodiment is also possible, for example illustrated in figure 5, wherein the first structure part A comprises at least two anchor devices 5 between two adjacent dummy legs 3. In the example illustrated in figure 5 only two anchor devices 5 are represented but more than two anchor devices 5 are also possible. In this embodiment, these at least two anchor devices 5 are preferably distributed symmetrically on each side and/or directly on a central straight line equidistant from the two dummy legs 3 and passingthrough the longitudinal axis Y of the support structure 1. The different radii of the second circle X2 compared to the radius of the first circle X1 of the first, second and third embodiments described above are also possible for this embodiment.

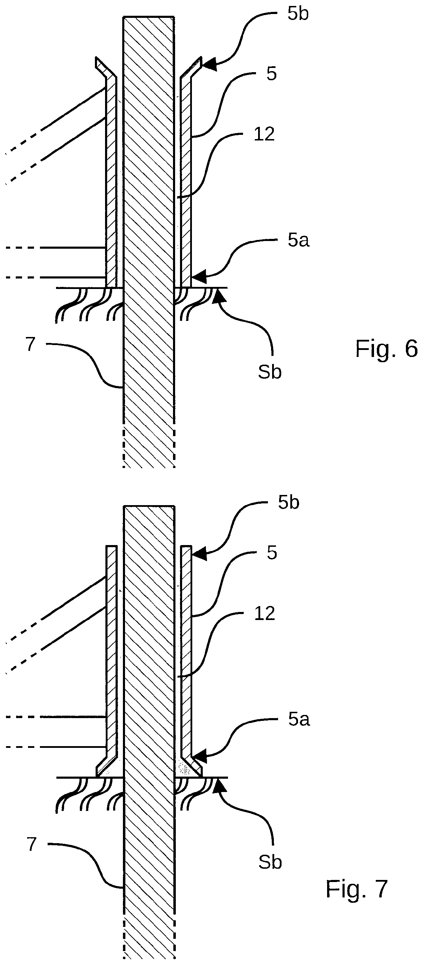

As shown in figures 6 and 7, the anchor devices 5 may be sleeves configured to receive and to be fixed to piles 7. These piles are designed to be driven or drilled into the seabed Sb. The sleeves 5 may comprise a lower extremity 5a designed to face the seabed Sb and an upper extremity 5b opposed to the lower extremity 5b. The sleeves 5 may have a hollow shape complementary to the pile 7. The pile 7 is inserted through the hollow part of the sleeve 5. The sleeve 5 and the pile 7 may be fixed together by grouting, for example by a cement grout 12 or by other means like welding or swaging by hydraulic pressure means.

The sleeve 5 may also comprise guiding portion at its upper 5b and/or lower 5a extremity in order to ease the insertion of the pile 7 depending if the pile 7 is inserted by the upper 5b or lower 5a extremity into the sleeve 5. This guiding portion may consist for example in a flared portion forming a funnel at the extremity 5a, 5b of the sleeve 5.

The anchor devices 5 may also comprise other elements like suction buckets (not illustrated) or some concrete foundation as gravity-based structure.

The first structure part A may preferably be a jacket structure consisting of a welded space frame comprising the dummy legs 3 supported by a lateral bracing system.

As shown in figure 1, the second structure part B comprises at least three structure legs 4. These structure legs 4 are extending along the longitudinal axis Y of the support structure 1 and supported by a lateral bracing system. The structure legs 4 comprise a lower extremity Ba, facing the first structure part A and an upper extremity Bb configured to be placed above the sea level SI. The second structure part B may also preferably be a jacket structure consisting of a welded space frame.

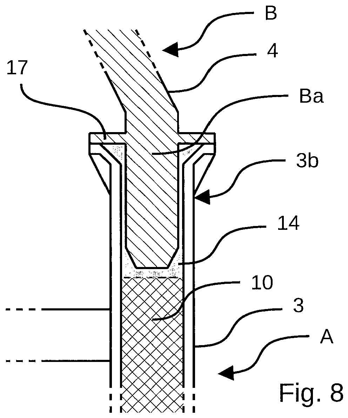

According to a first embodiment, illustrated in figure 8, the second structure part B may comprise a lower extremity Ba designed to be linked to the upper extremity 3b of the dummy legs 3 of the first structure part A. The upper extremity 3b of the dummy legs 3 of the first structure part A comprises respectively one of a receiving opening or a pin and the lower extremity Ba of the second structure part B comprises respectively one of a pin or a receiving opening. The pin and the receiving opening are configured to fit together. The pin may be fixed into the receiving opening by grouting, for example by a cement grout 14 or by other means like welding or swaging by hydraulic pressure means. In order to ease the insertion of the pin into the receiving opening, said receiving opening may comprises a guiding portion. This guiding portion may consist in a flared portion forming a funnel at the entry of the receiving opening. The pin may also comprise a stopper element 17 coming into contact with the receiving opening in order to permit the transfer of effort between the upper extremity 3b of the dummy legs 3 and the lower extremity Ba of the second structure part B. In the example illustrated on figure 8, the receiving opening is placed on the upper extremity 3b of the dummy leg 3 and the pin is placed on the lower extremity Ba of the second structure Part B.

The upper extremity Bb of the second structure part B is configured to be placed above the sea level SI and may also comprises a platform 8 in order to receive a mast of an offshore turbine.

The section dimension of the upper extremity Bb of the second structure part B may also be smaller surface than the section dimension of the lower extremity Ba. Thus, the legs of the second structure part B may be inclined compared to the longitudinal axis Y of the support structure 1.

As shown in figures 1 an 8 to 12, the first structure part A and/or of the structure legs 4 of the second structure part B are at least partially filled with a solid ballast 10. Additional weight reduces potential tension forces exerted on piles, for example as wind forces are exerted with a very large lever with regards to sea bottom, and therefore induce significant over turning moment on the structure at its base level, which results in significant tension.

The combination between this at least partial ballasting and the fact that the first structure part A comprises at least three dummy legs 3 distributed regularly on a first circle X1 and at least one anchor device 5 positioned angularly or positioned at equal distance between two adjacent dummy legs 3 on a second circle X2, especially if the second circle X2 has a larger radius than the first circle X1, increase the compressive forces on the anchor devices 5 and decrease the traction forces on the same anchor devices 5 due to the increase of the weight of the support structure 1. The support structure 1 is then more stable and more resilient to the lateral forces and movements due to the current or the wind. This combination, especially the fact that at least one anchor device 5 of the first structure part A is positioned angularly or positioned at equal distance between two adjacent dummy legs 3 also permits to facilitate the access to the anchor devices 5 for the anchoring tools such as a hammer to drive the piles 7 and the access to the dummy legs 3 to filled them at least partially with the solid ballast 10.

In general, the interaction capacity in tension between the piles 7 and the soil below the seabed Sb is less than in compression and piles 7 lengths are often governed by maximum tension applied on piles 7. This means that additional weight in the support structure 1 will help to reduce pile 7 penetration requirement. This may be beneficial to reduce pile 7 steel and manufacturing costs, installation duration & costs (especially if piles 7 have to be drilled, which is costly & time consuming, rather than driven).

Ballasting totally or partially the structure parts A and/or B also modify the dynamic response of the support structure 1 and therefore provide an ability to fine tune the overall support structure 1 dynamics to wind turbines & wave induced excitation.

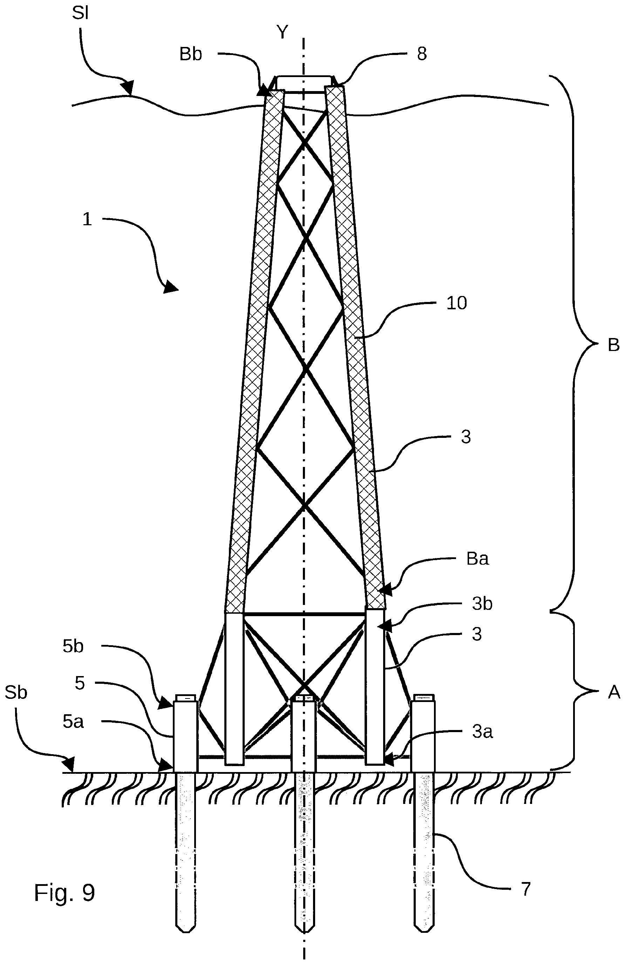

As shown in figures 1 and 9, the dummy legs 3 of the first structure part A and/or of the structure legs 4 of the second structure part B comprise at least one hollowed portion on their length filled with the solid ballast 10. Filling partially or totally the dummy legs 3 of the first structure part A and/or of the structure legs 4 of the second structure part specifically reinforce the nodes against fatigue, punching shear effects and increase the capacity to resist to a boat impact.

According to a first embodiment illustrated in figures 1 and 9, the dummy legs 3 of the first structure part A and/or the structure legs 4 of the second structure part B are filled with the solid ballast 10 on the entire of their length.

In order to fill the dummy legs 3 of the first structure part A and/or the structure legs 4 of the second structure part B on the entire of their length with a solid ballast 10, the upper extremities 3b, Bd of the dummy legs 3 and/or of the structure legs 4 could be opened in order to fill the dummy legs 3 and/or of the structure legs 4 with a solid ballast 10, as shown in figures 1 and 9.

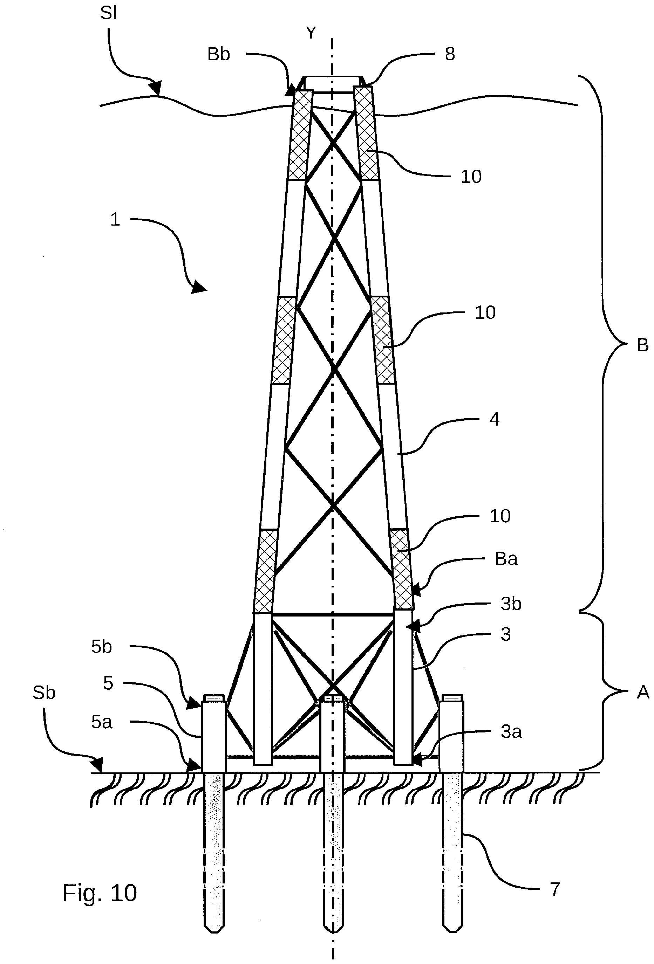

According to a second embodiment illustrated in figure 10 the dummy legs 3 of the first structure part A and/or the structure leg 4 of the second structure part B comprise hollowed portion configured to be filled with a solid ballast 10, the dummy legs 3 and/or the structure legs 4 comprise at least one side opening communicating with these hollowed portions in order to fill them with a solid ballast 10. If one of these hollowed portions is placed at the upper extremities 3b, Bb of the dummy legs 3 and/or of the structure legs 4, this upper extremities 3b, Bb can be opened in order to fill this top hollowed portion with a solid ballast 10.

The solid ballast 10 could comprise at least one of the following materials: sand, gravel, concrete grouting, magnadense, material recovered on site.

The support structure 1 is configured to be placed in locations with a depth of 80 to 150m. As an example, for a depth around 100m, the first structure part A may have a height comprised between 30 and 40m and the second structure part B may have a height comprised between 60 and 70m. For greater depths, the first structure may be higher.

As shown in figures 1, 9 and 10, the second structure part B may be in one piece, for example for a second structure part B between 60 to 70m. For higher second structure part B, the second structure part B may be divided in two sub-structures not illustrated. The two sub-structures may be stacked and linked together during the installation of the support structure 1. These two sub-structures may be attached together by means 10 similar with the means connecting the first A and second B structure parts. This division of the second structure part B is especially advantageous for the transportation and the storage of the second structure parts B and also for the installation. Indeed, as the sub-structures are lower and less heavy, their transport could be made by a smaller transportation barge and their installation could be made by a smaller floating crane.

In order to ease the manufacturing process of the support structure 1, the first structure A and the second structure part B may be standardized and have a constant height. This allows an automatization and standardization of the manufacturing of the structure parts A and B and allow the use of robotic means for their fabrication. It is thus possible to mass produce the structure parts A and B and store them so that they are available for various fields around the world or regionally.

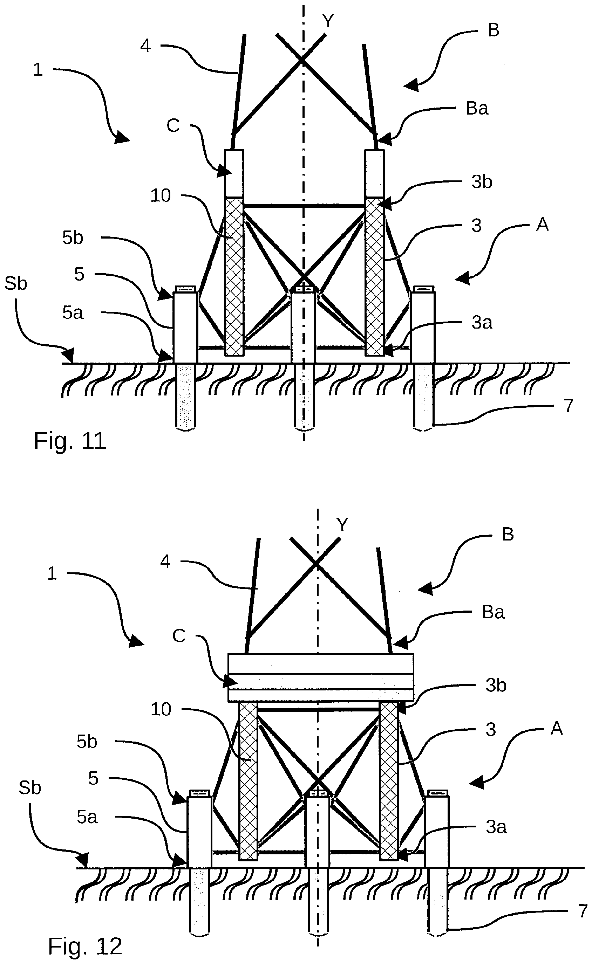

In order to compensate the bathymetry, the support structure 1 may comprises at least one intermediate element C placed between the first structure part A and the second structure part B, as shown in figures 11 and 12. More precisely, the at least one intermediate element C may be placed between the upper extremity 3b of the dummy leg 3 of the first structure part A and the lower extremity Ba of the structure leg 4 of the second structure part B. The first structure part A and the second structure part B may have a standardized height and the at least one intermediate element C may have a variable height depending of the bathymetry of the position of the support structure 1.

The at least one intermediate element C could be for example a metallic extension welded on the upper extremity 3b of the dummy leg 3 of the first structure part A and/or welded on the lower extremity Ba of the structure leg 4 of the second structure part B.

As shown in figures 11 and 12, the at least one intermediate element C could be a concrete element placed between the upper extremity 3b of the dummy leg 3 of the first structure part A and the lower extremity Ba of the structure leg 4 of the second structure part B.

The support structure 1 could comprise an individual concrete element 10 between each individual dummy leg 3 of the first structure part A and structure leg 4 of the second structure part B as shown in figure 11.

Alternatively, the concrete element C could be at least one concrete slab placed between the first structure part A and the structure leg (4) of the second structure part B as shown in figure 12.

The at least one intermediate element C could also be is a steel intermediate frame linking the dummy legs 3 of the first structure part A and the structure legs 4 of the second structure part B together.

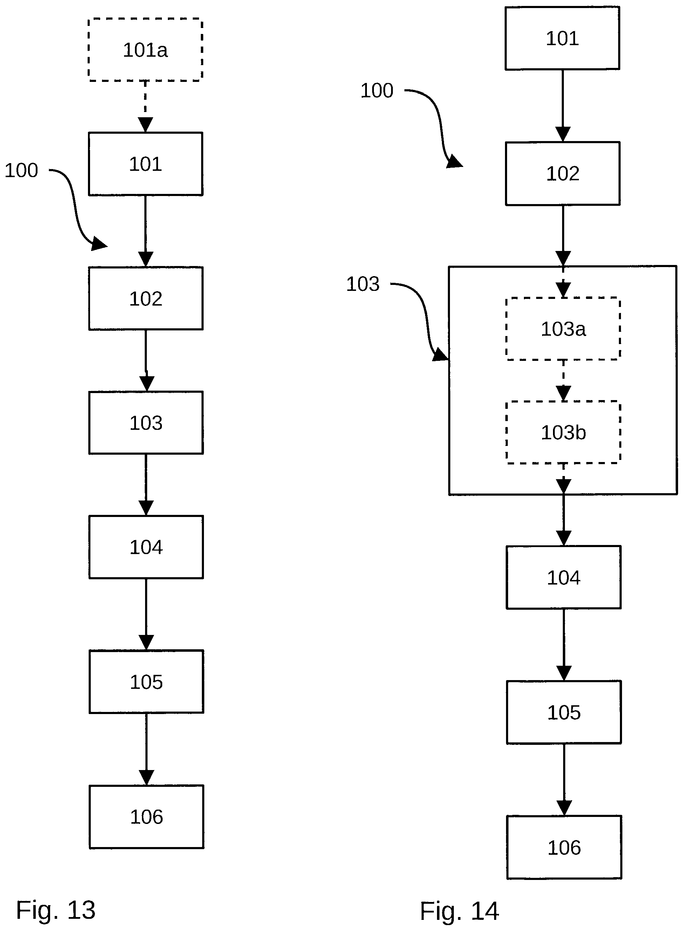

The present invention also refers to a process 100 to install support structures 1 for a wind farm installation as described above. The steps of such process are represented in figure 13.

This process comprises a first step 101 of transportation on site of one or several first structure parts A. As describe above, the first structure parts A comprises at least three dummy legs 3 extending along said longitudinal axis Y of the support structure 1. These dummy legs 3 could be distributed regularly on a first circle X1 having as center a longitudinal axis Y of the support structure Y and. The dummy legs 3 comprise a lower extremity 3a designed to face the seabed Sb and an upper extremity 3b opposed to the lower extremity 3a. The first structure part A also comprises at least three anchor devices 5 linked to the at least three dummy legs 3. At least one anchor device 5 of the first structure part A is positioned angularly between two adjacent dummy legs 3, that is to say within the arc defined by the radii connecting the longitudinal axis Y to the two adjacent dummy legs 3. The at least one anchor device 5 is also positioned on a second circle X2 having as center the longitudinal axis Y of the support structure A. As mentioned before, the first structure parts A could be brought on site by a transportation barge. As the first structure parts A are smaller and lighter, several first structure parts A could be placed on the same transportation barge and they could be placed vertically to ease the next step of installation.

A second step 102 is a step of installation of the first structure parts A on the seabed Sb. This second step 102 could be performed with a floating crane. As the first structure parts A are smaller and lighter the floating crane could be smaller in order to limit and reduce costs.

A third step 103 is a step of fixation of the first structure parts A on the seabed Sb with the anchor devices 5. Depending on the anchor devices 5, this third step 103 could be performed differently, for example with piles 7 driven or drilled into the seabed, by suction buckets or with some concrete foundation as gravity-based structure. However, due to the fact that the anchor devices 5 are offset compared to the dummy legs 3, the risks of damage on the support structure 1 are reduced. This is particularly advantageous when the anchor devices 5 are fixed with piles 7 driven into the seabed Sb.

These three steps 101, 102 and 103 may be performed during a same campaign of installation of the first structure parts A. The other following steps of installation of the second structure parts B may be performed later during another campaign of installation directly following the first campaign or delayed.

A fourth step 104 is a step of transportation on site of one or several second structure parts B. These second structure parts B comprise at least three structure legs 4 comprising a lower extremity Ba facing the first structure part A and an upper extremity Bb configured to be placed above the sea level SI, As mentioned before, the second structure parts B could be brought on site by transportation barge. As the second structure parts B are smaller and lighter compared to the support structure 1 as a whole, several second structure parts B could be placed on the same transportation barge and they could be placed vertically to facilitate the next step of installation.

A fifth step 105 is a step of lifting and stacking the second structure parts B on the first structure parts A underwater. This fifth step 105 could be performed with a floating crane. As the second structure parts B are smaller and lighter compared to the support structure 1 as a whole, the floating crane could be smaller in order to limit costs.

A sixth step 106 is a step of fixation of the second structure parts B on the first structure parts A. as mentioned before, this fixation could be performed by different means like grouting, welding or swaging by hydraulic pressure means.

The process 100 also comprises a step of filling the first structure parts A and/or the second structure part B with a solid ballast 10 after their installation on site. This step could be performed at different moment during the process. For example, if it is the dummy legs 3 of the first structure part A which is destined to be filled with a solid ballast 10, this step could be performed just after the second step 102 of installation of the first structure parts A on the seabed Sb. If it is the structure legs 4 of the structure part B which is destined to be filled with a solid ballast 10, this step could be performed just after the fifth step 105 of lifting and stacking the second structure parts B on the first structure parts A underwater. Alternatively, the structure part B can be filled partially with a solid ballast 10 before the fifth step 105 and the filling completed after.

Increasing the weight of the support structure 1 after its installation, permits to limit the costs of the construction, the transportation and the installation, as the support structure 1 is lighter for these steps.

The process 100 may also comprises a step of installation of at least one intermediate element C designed to be placed between the first structure part (A) and the second structure part B. This step could be performed on site, on the boat, underwater or before the first step or the fourth step of transportation of the first A or the second B structure parts.

This process 100 permits to reduce costs of the installation but also permits the installation itself with conventional transportation barges or vessels optionally equipped with standard cranes, slings and winches, and optionally with the assistance of distinct floating cranes. Indeed, the support structure 1 in two parts A and B permits to install bigger support structure 1 with much smaller transportation barges and floating cranes than for a support structure in one piece. In addition, depending on the loading capacity of the considered transportation barge or vessel, it may be possible to stack a plurality of parts A and/or a plurality of parts B in view of on-site transportation and installation provided the total height of the stack of parts A and/or B does not prevent the crane to lift, separate and set-up each individual part A and/or B. This process is particularly useful for installation of support structures 1 in water depths which were not easily accessible using traditional means until now.

If the anchor devices 5 are sleeves, the process 100 may comprises a preliminary step 101a of insertion of piles 7 into the seabed Sb to form a reception area for each first structure parts A before the step 101 of installation of the first structure parts A on the seabed Sb. In this case, the step 101 of installation of the first structure parts A on the seabed Sb consists of docking the preinstalled piles 7 into the sleeves of the anchor devices 5.

A template could be dropped on the seabed Sb in order to guide the insertion of the piles 7 during the preliminary step 101a of insertion of the piles 7. This template could be removed after the formation of the reception area for a first structure part A and reused to form another reception area for another first structure part A.

In another embodiment, shown in figure 13, wherein the anchor devices 5 are also sleeves, the piles 7 are not placed before the installation of the first structure part A but after. Thus, the step 103 of fixing the first structure parts A on the seabed Sb consists of a first sub step 103a of insertion of the piles 7 through the sleeves 5 and into the seabed Sb. In a second sub step 103b, the sleeves 5 and the piles 7 are fixed together. In this embodiment, the first structure part A is used as a template for the piles 7.

## Claims

1. Support structure (1) for an offshore wind turbine, said support structure (1) comprising:
- a first structure part (A) destined to be fixed to the seabed (Sb), said first structure part (A) comprising at least three dummy legs (3) distributed regularly on a first circle (X1) having as center a longitudinal axis (Y) of the support structure (1) and extending along said longitudinal axis (Y) of the support structure (1), said dummy legs (3) comprising a lower extremity (3a) designed to face the seabed (Sb) and an upper extremity (3b) opposed to the lower extremity (3a), the first structure part (A) also comprising at least three anchor devices (5) to the seabed (Sb) linked to the at least three dummy legs (3),
- a second structure part (B) comprising at least three structure legs (4) comprising a lower extremity (Ba) facing the first structure part (A) and an upper extremity (Bb) configured to be placed above the sea level (SI),
wherein at least one anchor device (5) of the first structure part (A) is positioned angularly between two adjacent dummy legs (3) on a second circle (X2) having as center the longitudinal axis (Y) of the support structure (1),
and wherein at least one of the dummy legs (3) of the first structure part (A) and/or of the structure legs of the second structure part (B) are at least partially filled with a solid ballast (10).

2. Support structure (1) according to claim 1, wherein the dummy legs (3) of the first structure part (A) and/or of the structure legs (4) of the second structure part (B) comprise at least one hollowed portion on their length filled with the solid ballast (10).

3. Support structure (1) according to claim 1, wherein the dummy legs (3) of the first structure part (A) and/or the structure legs (4) of the second structure part (B) are filled with the solid ballast (10) on the entire of their length.

4. Support structure (1) according to any of the claims 2 or 3, wherein the upper extremities (3b, Bb) of the dummy legs (3) of the first structure part (A) and/or of the structure legs (4) of the second structure part (B) are opened in order to fill with a solid ballast (10).

5. Support structure (1) according to any of the claims 2 to 4, wherein the dummy leg (3) of the first structure part (A) and/or the structure leg (4) of the second structure part (B) comprise at least one side opening communicating with a hollowed portion of the dummy leg (3) of the first structure part (A) and/or the structure leg (4) of the second structure part (B) in order to fill with a solid ballast (10) said dummy legs (3) of the first structure part (A) and/or said structure legs (4) of the second structure part (B).

6. Support structure (1) according to any of the preceding claims, wherein the solid ballast (10) comprises at least one of the following materials: sand, gravel, concrete grouting, magnadense, material recovered on site.

7. Support structure (1) according to any of the preceding claims, wherein said support structure (1) comprises at least one intermediate element (C) placed between the first structure part (A) and the second structure part (B).

8. Support structure (1) according to the preceding claim, wherein the first structure part (A) and the second structure part (B) have a standardized height and the at least one intermediate element (C) has a variable height depending of the bathymetry.

9. Support structure (1) according to the any of claim 7 or 8, wherein the at least one intermediate element (C) is a metallic extension welded on the upper extremity (3b) of the dummy leg (3) of the first structure part (A) and/or welded on the lower extremity (Ba) of the structure leg (4) of the second structure part (B).

10. Support structure (1) according to the any of claim 7 or 8, wherein the at least one intermediate element (C) is a concrete element placed between the upper extremity (3b) of the dummy leg (3) of the first structure part (A) and the lower extremity (Ba) of the structure leg (4) of the second structure part (B).

11. Support structure (1) according to claim 10, wherein it comprises an individual concrete element (10) between each individual dummy leg (3) of the first structure part (A) and structure leg (4) of the second structure part (B).

12. Support structure (1) according to claim 10, wherein the concrete element (C) is at least one concrete slab placed between the first structure part (A) and the structure leg (4) of the second structure part (B).

13. Support structure (1) according to the any of claim 7 or 8, wherein the at least one intermediate element (C) is a steel intermediate frame linking the dummy legs (3) of the first structure part (A) and the structure legs (4) of the second structure part (B) together.

14. Process to install support structures (1) for a wind farm installation, said process comprising the following steps:
- transportation on site of at least one first structure part (A), said first structure part (A) comprising at least three dummy legs (3) distributed regularly on a first circle (X1) having as center a longitudinal axis (Y) of the support structure (Y) and extending along said longitudinal axis (Y) of the support structure (1), said dummy legs (3) comprising a lower extremity (3a) designed to face the seabed (Sb) and an upper extremity (3b) opposed to the lower extremity (3a), the first structure part (A) also comprising at least three anchor devices (5) to the seabed (Sb) linked to the at least three dummy legs (3), at least one anchor device (5) to the seabed (Sb) of the first structure part (A) being positioned angularly between two adjacent dummy legs (3) on a second circle (X2) having as center the longitudinal axis (Y) of the support structure (A),
- installation of the first structure parts (A) on the seabed (Sb),
- fixing the at least one first structure part (A) on the seabed (Sb) with the anchor devices (5),
- transportation on site of at least one second structure upper part (B),
- lifting and stacking the at least one second structure part (B) on the at least one first structure part (A) underwater,
- fixing the at least one second structure part (B) on the first structure parts (A), wherein said process also comprises a step of filling the first structure parts (A) and/or the second structure part (B) with a solid ballast (10) after their installation on site.

15. Process according to claim 14, wherein it also comprises a step of installation of at least one intermediate element (C) designed to be placed between the first structure part (A) and the second structure part (B).
